# EUROPEAN PATENT APPLICATION

(11) **EP 1 600 853 A2**
(43) Date of publication of application: **30.11.2005**
(21) Application number: 05011095.6
(22) Date of filing: 23.05.2005
(51) Int. Cl.: G06F 9/44

(54) **Outputting of table rows to an output device**

(30) Priority: 24.05.2004 DE 102004025439
(71) Applicant: SAP AG, 69190 Walldorf (DE)
(72) Inventor: Becker, Wolfgang, 67069 Ludwigshafen (DE)
(74) Representative: Walter, Philipe

(57) **Abstract**

A method for outputting rows of a table via an access function. The method comprises the following stages: displaying a superset of the elements of an ordering column of the table; determining a selected set from the superset by user interaction; selecting a row of the table in which there is an entry in the ordering column, where the entry is an element of the selected set; and outputting the selected row.

## Description

### TECHNICAL FIELD

The invention relates to user interfaces for outputting data, and more specifically, a method for outputting rows of a table via an access function.

### BACKGROUND

Computer users communicate with their computers via interfaces of all types. To cite just a few examples: users operate keyboards and mice, guide pens, place fingers over touch-sensitive surfaces, or speak into microphones. The computers interpret these actions as instructions and output documents on screens or printers.

The interfaces conventionally comprise hardware and software components. With graphical user interfaces (GUI) interaction takes place between mouse pointers, scroll bars and buttons on the screen, and keyboards and pointing equipment (for example mouse, tracker ball) in the user's hand.

As with any user-computer communication, there are limitations. For example, outputting of documents (such as tables or matrices) to output devices (such as screens or printers) is basically determined by the area of the output device and the type and number of entries in the document. It is often desirable to output individual regions of the document and to filter out other regions. This principle can, for example, be applied to individual rows that are selected with the user interfaces.

Improvements are desirable, in order, for example, to counter the following problems:

The documents are derived from sets of data that constantly change. For example, a computer administrator (i.e. user) assesses the status of a computer system using a table that is regularly updated with new entries. A static selection of table rows is thus ruled out. For example, the user must always re-input his options for row filters when he updates a table.

Typically search functions are implemented in the document as a free text search. However, the user often makes mistakes when inputting via the keyboard.

### SUMMARY

A method for outputting rows of a table via an access function is provided. The method comprises the following stages: displaying a superset of the elements of an ordering column of the table; determining a selected set from the superset by user interaction; selecting a row of the table in which there is an entry in the ordering column, where the entry is an element of the selected set; and outputting the selected row.

A machine-readable storage medium having stored thereon machine executable instructions is further provided. The execution of the instructions is adapted to implement a method for outputting rows of a table via an access function. The method comprises: displaying a superset of the elements of an ordering column of the table; determining a selected set from the superset by user interaction; selecting a row of the table in which there is an entry in the ordering column, where the entry is an element of the selected set; and outputting the selected row.

A system is provided. The system includes: a memory for storing instructions; and a processor, in communication with the memory, for executing the instructions. When executed, the instructions cause: displaying a superset of the elements of an ordering column of the table; determining a selected set from the superset by user interaction; selecting a row of the table in which there is an entry in the ordering column, where the entry is an element of the selected set; and outputting the selected row.

The foregoing summarizes only a few aspects of the disclosed embodiment and is not intended to be reflective of the full scope of the embodiments claimed. Additional features and advantages are set forth in the following description, may be apparent from the description, or may be learned by practicing the teachings of the disclosure. Moreover, both the foregoing summary and the following detailed description are exemplary and explanatory and are intended to provide further explanation of what is claimed.

### BRIEF DESCRIPTION OF THE DRAWINGS

The accompanying drawings, which are incorporated in and constitute a part of this specification, illustrate one embodiment and together with the description, serve to explain the principles of the operation of the embodiment.

Fig. 1 shows a computer and a display device in a typical application environment;

Fig. 2 shows a flow chart of a method consistent with the principles of the present invention;

Fig. 3 shows a simplified screen output which can be used, for example, in the stages of displaying and determining;

Fig. 4 shows a simplified display for an execution of the stage of specific storing of the selected set;

Fig. 5 shows, using the example of a table, an ordering column with entries which either belong to the selected set or not;

Fig. 6 shows the output of the rows in a positive selection-output relationship, selected rows being displayed; and

Fig. 7 shows a further simplified screen output.

### DESCRIPTION

Reference will now be made in detail to the present exemplary embodiments, examples of which are illustrated in the accompanying drawings. Wherever possible, the same reference numbers will be used throughout the drawings to refer to the same or like parts.

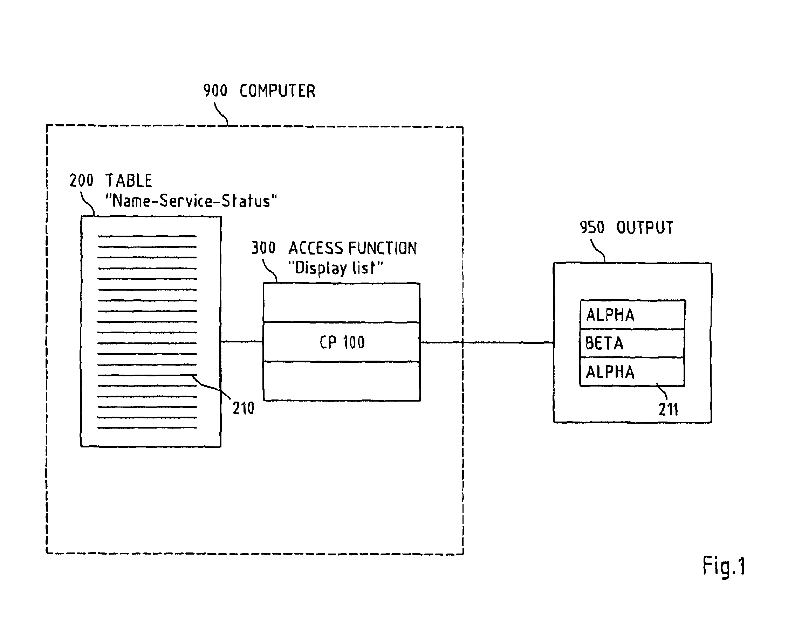

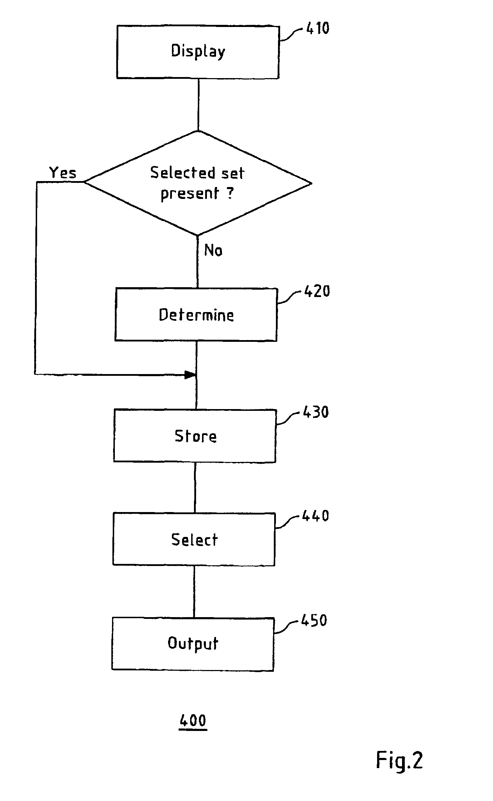

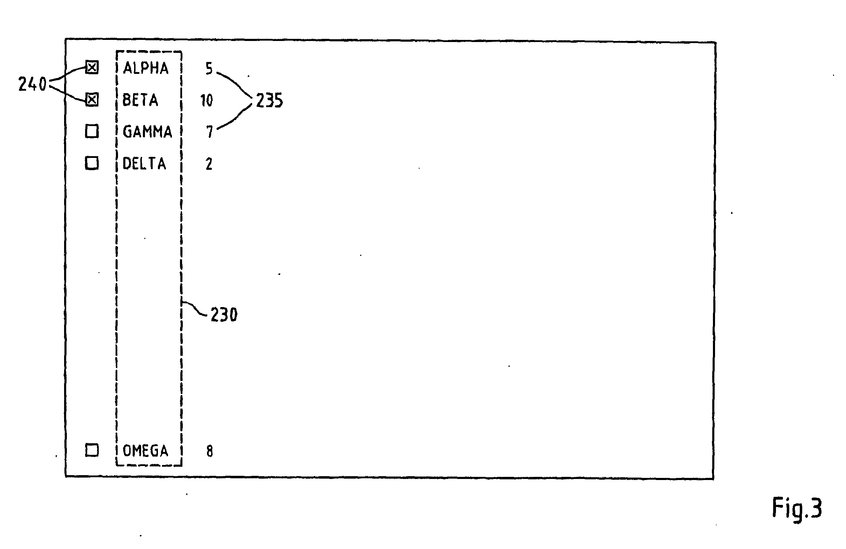

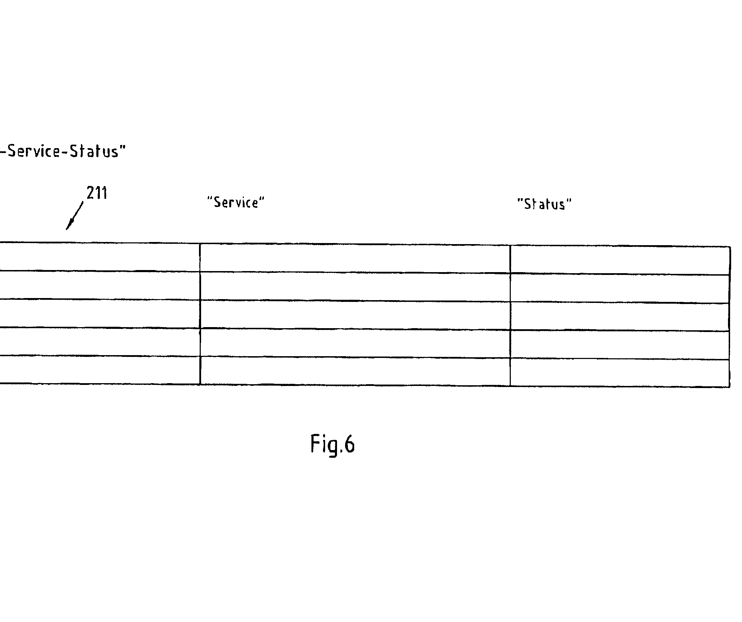

The description explains principles of the invention with a computer (Fig. 1) and a flow chart (Fig. 2). The details of the method with screen diagrams and table views are explained with respect to Figures 3 and 6, and a sample application for managing a computer system, of which the data is output in accordance with the invention is described using Figure 7.

Fig. 1 shows a computer and a display device in a typical application environment. Fig. 1 shows a computer 900 and an output device 950 in a typical application environment. In accordance with the principles of the invention a computer program (CP) 100 may be used to output rows 210 of a table 200 to output device 950.

The following description follows the drawing from left to right:

Computer 900 may have processors and memory and may be, for example, a personal computer (PC, portable or stationary) or a computer network comprising many individual computers (e.g., client-server principle).

Computer 900 executes an application (for example computer system administration or business application). The application conventionally comprises a plurality of modules or sub-applications. Within the application an access function 300 accesses the table 200. User interfaces may include, for example, display windows and selection fields.

Output device 950 is, for example, a computer screen. Printers and speech announcements are mentioned here as being representative of the large number of other suitable output devices. Accordingly, the word "output" (in all linguistical variants) is used for actions such as displaying (on screens), printing, or announcing (acoustic reproduction).

Table 200 may have rows 210 in a number which would overburden the output device or user if all rows 210 were output at the same time. For example, not all rows may fit on the screen, the printer would require too much paper and time, or an announcement would last too long.

According to a method consistent with the principles of the present invention, rows 210 of table 200 are output individually and according to a selection which the user makes. For example, the method may provide output rows 211 with the sample contents "Alpha" and "Beta."

For implementation, computer program 100 may be used with instructions which cause the processor of the computer to execute the method. As symbolised in Fig. 1 program 100 may be integrated into access function 300.

Program 100 may be composed, for example, of objects or modules which are designated in their specific embodiment by file names, addresses, object identifiers and the like. Identifiers of this type can also be used for table 200 and access function 300.

In the present example, the identifiers are written in quotation marks. A specific embodiment of table 200 has the identifier "Name-Service-Status" with columns respectively for "Name", "Service" and "Status". Access function 300 has the identifier "display list". The user of computer 900 and output device 950 has the user identifier "user01".

Fig. 2 shows a flow chart of method 400 according to the principles of the present invention. Method 400 is used for outputting rows 210 of a table 200 to output device 950 when computer 900 accesses table 200. The method may be implemented using computer program 100 and may have one or more of the following process stages:

In the displaying stage 410 a superset (cf. 230, Fig. 3) of the elements of an ordering column of table 200 is output. The superset is preferably output by display on a screen. Details of this stage are described in connection with Fig. 3.

In the determining stage 420 a selected set from the superset is determined by user interaction. Details are likewise described in Fig. 3.

In the selecting stage 440 a row in which an entry exists in an ordering column which is also an element of the selected set 240 is selected.

In the outputting stage 450 row 211 which has a predetermined selection-output relationship (AAB) to the selected row is output.

Explanatory notes on the further optional stages of storing and modifications of the stages follow:

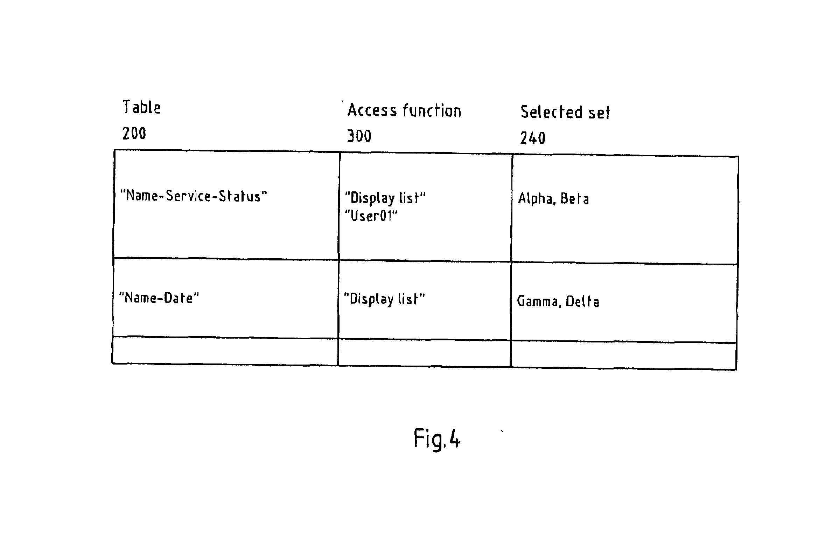

In the storing stage 430 the selected set is optionally stored specifically for table 200 and access function 300, implemented, for example, by storing in connection with the specific identifiers for the table and the access function. Details are in Fig. 4.

The storing stage 430 can optionally take place specifically for a certain user (cf. Fig. 4). Different users may have different requirements of the output of the table ― to stay with the example of screen display - each user sees the table from his own perspective. In other words, this optional feature allows dynamic personalization of the table output.

The storing stage 430 optionally takes place by storing the selected set 240 in a database, for example, in the same database as that which stores the table 200.

In the outputting stage 450, the AAB can be fixed so as to be positive or negative. If AAB is positive, display takes place on selection. If AAB is negative, the non-selected row is output, in other words, there is no output despite selection. In the described embodiment (cf. Figs 3 to 6) AAB is fixed so as to be positive. In other words, the non-selected rows are filtered out (and not displayed).

The stage of determining 420 may be skipped if, on repetition of the process 400, a selected set already exists which is specifically stored for the table 200 and the access function 300. The condition for skipping can be combined with storing 430 for a specific user. The selected set may be retained even if the user has in the meantime ended the application module (transaction) or even the entire application. The repeated selection of entries (determining stage) may thus be omitted for the user.

In the selecting stage 440 the frequency of the rows can be obtained. The frequency is based on the elements of the selected set. These frequencies can be displayed during user interaction in the determining stage 420. Exemplary details are illustrated in Fig. 3.

In the determining 420 and selecting 440 stages, an absolute or relative frequency of the selected rows may be displayed. An example is given in Fig. 7.

The description now comes to details of the stages in connection with screen diagrams and table views. An exemplary substantiation of the table "Name-Service-Status" stores Greek letters, which are written in Latin, i.e. "alpha", "beta", etc., in the ordering column "Name".

Fig. 3 shows a simplified screen output that, for example, can be used in the displaying 410 and determining 420 stages.

The illustration as a matrix is advantageous as a superset 230 is shown where, if entire table 200 were shown, the ordering column thereof may also be located: at the left-hand side.

The superset 230 of the entries occurring in the ordering column is the set of all letters, i.e. "alpha", "beta", etc. to "omega". These entries may fit easily onto a screen during display (stage 410).

For determining (stage 420) the selected set the user is offered check boxes, for example, which he can select. The selected set 240 in the example contains the two entries "alpha" and "beta".

Checked boxes may be located next to the elements of the selected set 240 and all boxes (whether checked or not) may be located next to the elements of the superset 230.

In other words, the selected set is a subset of the superset.

The person skilled in the art is capable of varying the user interface, for example with radio buttons, with which precisely one element is selected.

As stated above, a frequency can optionally be indicated. In the example of Fig. 3 the numbers 5, 10, 7, 2, ..., 8 (general reference numeral 235) to the right of the superset 230 give the absolute frequency of the elements within the ordering column. Further examples for the frequency can be found in Fig. 7.

Fig. 4 is a simplified illustration for one configuration of specific storing (stage 430) of the selected set.

In the example storing takes place in a matrix. The selected set "alpha", "beta" may be stored with respect to: a) the table 200 in the specific "Name-Service-Status", b) the access function "Display list" and c) (optionally) the specific user "user01".

Further selected sets can be stored in the matrix, for example the set "gamma", "delta" with respect to a) the table "Name-Date" and the access function "Display list".

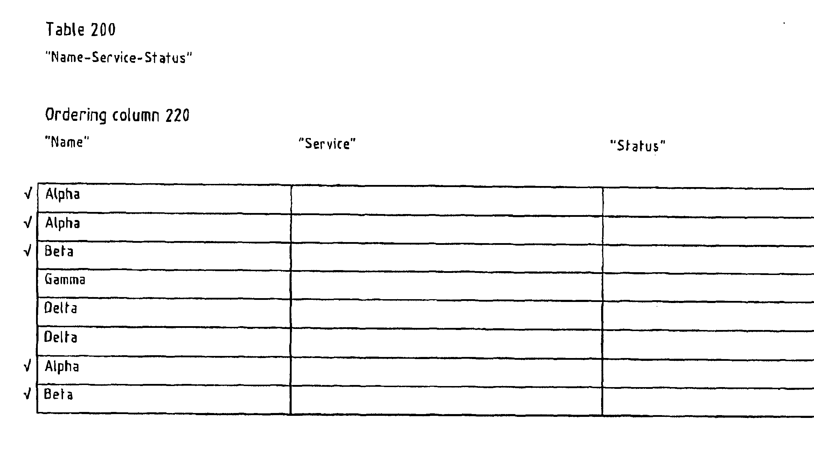

Fig. 5 shows, using the example of table 200 "Name-Service-Status", the ordering column 220 "Name" with entries such as alpha in rows 1-2, beta in row 3, gamma in row 4, etc., i.e. with entries which either belong to the selected set or not.

The checkmarks (on the left here in the figure) represent selected rows, i.e. rows 1 to 3 and 7 to 8, for example, as alpha and beta belong to the selected set.

Fig. 6 shows the output of the rows in a selection-output relationship, which in this case is positive: selected rows 211 are displayed.

Fig. 7 shows a further simplified screen output (screen shot) which can be used, for example, in the process stages of displaying 410 and determining 420.

In the example, the table 200 would store an operating protocol (log table) with which a computer administrator manages a computer system with different users, systems, applications (suites), database servers, etc.

As in the example, two or more selected sets can optionally be used for two or more ordering columns. The selection condition "entry in ordering column equals element of the selected set" is individually checked for the ordering columns and linked to an overall condition.

In other words, the method 400 can be configured in the stages of determining 420, storing 430 (optionally) and selecting 440 such that the application of these stages to a plurality of ordering rows and Boolean operation of the selection condition take place.

For example, if the overall condition is an AND-operator: selection of the rows takes place if the elements are present in both columns. In the example of Fig. 7 a total of four different users are indicated in the first ordering column "user" (superset "C503" to "D040") and the user "D007" is determined (element of the first selected set). Four different systems (superset) are indicated in the second ordering column "System ID" and the system "Al" is determined as the element of the selected set. Additional elements are determined in the further ordering columns "Suite" and "Database server".

Rows are selected and output after checking whether "User", "System ID", etc. accordingly correspond.

Alternatively, the overall condition can be an OR-operator. The rows would be selected if, at least in one ordering column, an entry of the selected set of this column is present.

Fig. 7 shows further optimal configurations of the process. Using the button 232 "Apply" the user can indicate that he has made the selection. In other words, the user interaction in the determining stage 420 is concluded with actuation of the button.

Alternatively, the user can use the button 233 "Save and Apply" and thus indicate that he has made the selection and that storing of the selected set is desired. In other words, the user interaction in stage 420 is thus concluded and the execution of the optional storing stage 430 is brought about.

Reference numeral 235 points to the frequencies of the elements of the superset in the ordering column, similarly to in the example of Fig. 3.

Reference numeral 234 points to the number of selected rows. In the example 90 rows are selected. The user has the opportunity to change the number of rows by changing his selection before the rows (stage 450) are output.

The person skilled in the art is capable of supplementing the process of the present invention in order to optimise user interaction. Thus buttons can be provided which bring about a pre-selection within the table. For example the time reference can be taken into account in the operating protocol (table 200) so only events of a predetermined period (for example the last month) are taken into account and events outside of this period are excluded from output from the outset.

Although the present invention has primarily been described in connection with a process, a person skilled in the art can also implement the invention as a computer system for executing the process and as a computer program (cf. CP 100, Fig. 1) with instructions which cause a processor of the computer to execute the process.

It will be readily apparent to those skilled in this art that various changes and modifications of an obvious nature may be made, and all such changes and modifications are considered to fall within the scope of the appended claims. Other embodiments will be apparent to those skilled in the art from consideration of the specification and practice of the disclosure. It is intended that the specification and examples be considered as exemplary only, with a true scope and spirit of the disclosure being indicated by the following claims and their equivalents.

## Claims

1. A method for outputting rows of a table via an access function, the method comprising:
- displaying a superset of the elements of an ordering column of the table;
- determining a selected set from the superset by user interaction;
- selecting a row of the table in which there is an entry in the ordering column, where the entry is an element of the selected set; and
- outputting the selected row.

2. The method of claim 1, further comprising storing the selected set specifically for the table and the access function.

3. The method of claim 2, further comprising skipping the determining stage if on repetition of the method a selected set exists which is stored specifically for the table and the access function.

4. The method of claim 2, wherein storing further comprises storing specifically for a user.

5. The method of claim 2, wherein storing further comprises storing the selected set in a database.

6. The method of claim 1, wherein outputting further comprises a selection-output relationship in which either the selected row is output or the non-selected row is output.

7. The method of claim 1, wherein selecting further comprises obtaining the frequency of the rows based on the elements of the selected set.

8. The method of claim 1, wherein determining selecting further comprises determining and selecting a plurality of ordering columns based on a Boolean operation of the selected set.

9. The method of claim 1, wherein determining and selecting a selected set further comprises displaying a frequency of the selected rows.

10. A machine-readable storage medium having stored thereon machine executable instructions, the execution of said instructions adapted to implement a method for outputting rows of a table via an access function, the method comprising:
- displaying a superset of the elements of an ordering column of the table;
- determining a selected set from the superset by user interaction;
- selecting a row of the table in which there is an entry in the ordering column, where the entry is an element of the selected set; and
- outputting the selected row.

11. The machine-readable storage medium of claim 10, further comprising storing the selected set specifically for the table and the access function.

12. The machine-readable storage medium of claim 11, further comprising skipping the determining stage if on repetition of the method a selected set exists which is stored specifically for the table and the access function.

13. The machine-readable storage medium of claim 11, wherein storing further comprises storing specifically for a user.

14. The machine-readable storage medium of claim 11, wherein storing further comprises storing the selected set in a database.

15. The machine-readable storage medium of claim 10, wherein outputting further comprises a selection-output relationship in which either the selected row is output or the non-selected row is output.

16. The machine-readable storage medium of claim 10, wherein selecting further comprises obtaining the frequency of the rows based on the elements of the selected set.

17. The machine-readable storage medium of claim 10, wherein determining selecting further comprises determining and selecting a plurality of ordering columns based on a Boolean operation of the selected set.

18. The machine-readable storage medium of claim 10, wherein determining and selecting a selected set further comprises displaying a frequency of the selected rows.

19. A system comprising:
- memory for storing instructions;
- a processor, in communication with the memory, for executing the instructions, wherein the instructions are for:
- displaying a superset of the elements of an ordering column of the table;
- determining a selected set from the superset by user interaction;
- selecting a row of the table in which there is an entry in the ordering column, where the entry is an element of the selected set; and
- outputting the selected row.
